# EUROPÄISCHE PATENTSCHRIFT

(11) **EP 3 025 031 B1**
(45) Veröffentlichungstag und Bekanntmachung des Hinweises auf die Patenterteilung: **26.10.2022**
(21) Anmeldenummer: 14771224.4
(22) Anmeldetag: 10.09.2014
(51) Int. Cl.: F01K 3/00, F01K 7/22, F01K 13/02, F01K 23/10

(54) **VERFAHREN ZUM BETREIBEN EINER DAMPFTURBINENANLAGE**
METHOD OF OPERATING A STEAM TURBINE PLANT
PROCÉDÉ DE FONCTIONNEMENT D'UNE CENTRALE À TURBINE À VAPEUR

(30) Priorität: 24.09.2013 DE 102013219189
(43) Veröffentlichungstag der Anmeldung: 01.06.2016
(73) Patentinhaber: Siemens Energy Global GmbH & Co. KG, 81739 München (DE)
(72) Erfinder: LENK, Uwe, 08064 Zwickau (DE); TREMEL, Alexander, 91096 Möhrendorf (DE)
(86) Internationale Anmeldenummer: PCT/EP2014/069257
(87) Internationale Veröffentlichungsnummer: WO 2015/043949

(56) Entgegenhaltungen:
- EP-A1- 0 439 754
- EP-A1- 0 976 914
- EP-A2- 2 525 052
- WO-A1-2014/044425
- DE-A1- 10 260 993
- DE-A1-102011 100 517
- DE-B- 1 048 596
- DE-B- 1 206 443
- JP-A- S6 069 220
- US-A- 1 925 078
- US-A- 2 247 595
- US-A- 3 129 564
- US-A- 3 398 534
- US-A- 4 164 848

## Beschreibung

Die Erfindung betrifft ein Verfahren zum Betreiben einer Dampfturbinenanlage mit einer Dampfturbine und einem Dampferzeuger.

Dampfturbinenanlagen der eingangs genannten Art sind im Stand der Technik bekannt und werden zur Stromerzeugung im Stromverbundnetz eingesetzt. Zur Aufrechterhaltung der Netzfrequenz im Falle von unvorhergesehenen Störungen wird Regelleistung bereitgehalten. Jeder Netzbetreiber muss hierfür 2 % seiner momentanen Erzeugungsleistung als Primärregelreserve zur Verfügung stellen. Typischerweise wird diese Primärregelreserve von Großkraftwerken mit Leistungen von mehr als 100 MW bereitgestellt. Dies umfasst Dampfturbinenanlagen als auch kombinierte Gas- und Dampfturbinenanlagen (GuD-Anlagen).

Um die Regelleistung schnell (in weniger als 30 s) bereitzustellen, werden Dampfturbinenkraftwerke im normalen Betrieb leicht angedrosselt, d. h. vor der Dampfturbine werden Dampfturbinenregelventile eingebaut. Wenn nun Regelleistung bereitgestellt werden muss, wird das Drosselventil vollständig geöffnet und es steht eine Leistungsreserve zur Verfügung. Diese Primärregelleistung wird dann für bis zu 15 min. gehalten.

Da der maximale Wirkungsgrad der Dampfturbine jedoch nur bei Vollleistung erreicht wird, werden die Kraftwerke aufgrund der zur Vorhaltung der Leistungsreserve notwendigen Androsselung im Normalbetrieb mit einem leicht verschlechterten Wirkungsgrad im Vergleich zu ihrem maximal möglichen Wirkungsgrad betrieben.

Es ist daher ein technisches Erfordernis, ein Verfahren zum Betreiben einer Dampfturbinenanlage anzugeben, welches die Bereitstellung einer Leistungsreserve bei gleichzeitig möglichst hohem Wirkungsgrad im Normalbetrieb ermöglicht.

Einen Lösungsansatz hierzu kann die DE048596 geben, welche beschreibt, dass Dampf aus einem Dampfspeicher bei plötzlichem Belastungsanstieg und zur schnellen Leistungssteigerung entnommen werden soll, um diesen einer sich bereits in Betrieb befindlichen Dampfturbine zuzuleiten. Vergleichbare Lösungsansätze sind aus der US 2247595 A, der US 1925078 A , der EP0976914 A1 oder der US 3398534 A bekannt. Aus der EP 0 439 754 A1 ist weiterhin eine entsprechende Anwendung beim Anfahren einer Dampfturbine bekannt, wobei Dampf aus einem Dampfspeicher zur Unterstützung der Dampfturbine bei gleichzeitig betriebenem Abhitzedampferzeuger entnommen wird.

Dabei berücksichtigt der Stand der Technik aber nicht, dass die Leistungsabgabe einer Dampfturbinenanlage während des Aufladens des Dampfspeichers durch diesen Aufladevorgang beeinträchtigt wird. Durch Abzweigen von Dampf für den Dampfspeicher steht nämlich weniger Dampf für den Leistungsbetrieb der Dampfturbine zur Verfügung. Da eine Dampfturbinenanlage aber in erster Linie gemäß der bestehenden Leistungsnachfrage betrieben wird, stellt sich damit die Erfindungsaufgabe, eine Dampfturbinenanlage mit Dampfspeicher vorzuschlagen, welche einen hinsichtlich der Betriebskosten verbesserten Betrieb ermöglicht. Insbesondere soll der Aufladevorgang des Dampfspeichers energie- und kosteneffizient erfolgen.

Diese Aufgabe wird erfindungsgemäß durch das Verfahren des Anspruchs 1 gelöst.

Die Erfindung geht dabei - vergleichbar dem Stand der Technik - von der Überlegung aus, dass zur Verbesserung des Wirkungsgrades und der Flexibilisierung der Dampfturbinenanlage die Dampfturbine mit Dampf aus einem thermischen Speicher versorgt werden soll. Hierfür eignen sich Wärmespeicher, in denen Wärme für zukünftigen Bedarf gespeichert und vorgehalten werden kann. Diese kann dann etwa in Form von Heißdampf dem Speicher entnommen und in der Dampfturbine in mechanische Leistung umgewandelt werden. Ein Wärmespeicher kann bspw. aber auch als sensibler Wärmespeicher oder auch als PCM-Wärmespeicher ausgebildet sein, welcher seine Wärme zur Verdampfung von Wasser abgeben kann, damit der so gebildete Dampf im Anschluss der Dampfturbine zugeführt wird.

Erfindungsgemäß wird der Dampf der Dampfturbine zugeführt während der Dampferzeuger außer Betrieb ist. Hierbei ist es möglich, bei einem ausreichend großen Wärmespeicher den Dampfturbinenbetrieb mit Dampf aus dem Speicher ohne und/oder mit Leistungsbereitstellung aufrecht zu erhalten. Der Wärmespeicher wird also dazu genutzt, die Dampfturbine auch ohne Wärmebereitstellung im Dampferzeuger (z. B. abgeschalteter Gasturbine im GuD-Kraftwerk) am Netz zu halten. Hierfür wird die Dampfturbine mit einer geringen Menge an Dampf aus dem Speicher versorgt, um die rotierende Masse am Netz zu halten. Die Dampfmenge ist dabei so gewählt, dass Reibungs-und sonstige Verluste der Dampfturbine durch die Zufuhr von Dampf ausgeglichen werden.

Parallel oder auch alternativ kann vorteilhafterweise auch der Dampferzeuger warmgehalten werden. Dies wird durch die kontinuierliche Zufuhr einer geringen Menge an Dampf zum Dampferzeuger erreicht. Die Dampfmenge wird so gewählt, dass die Wärmeenergie des Dampfes die Wärmeverluste des Dampferzeugers ausgleicht. Der Dampferzeuger verbleibt so auf einer relativ hohen Temperatur und kann schnell wieder in den Volllastbetrieb überführt werden, z. B. wenn die Gasturbine in einem GuD-Kraftwerk angefahren wird. Dieses Betriebskonzept bietet die Möglichkeit zur Warmhaltung der Dampfturbine und evtl. des Dampferzeugers, so dass die benötigte Anfahrzeit des Kraftwerkes kürzer wird und die Anlage zu Regelzwecken (z. B. Ausgleich von Leistungsschwankungen im Netz) eingesetzt werden kann.

Die Aufladung des Wärmespeichers ist grundsätzlich auf viele Arten möglich. Zum Beispiel ist eine elektrische Beheizung (mit Elektroheizern oder Wärmepumpen) des Speichers möglich, womit auch Überschussstrom aus fluktuierenden Energiequellen (Wind, Sonne) aus dem Netz aufgenommen werden könnte. Eine besonders vorteilhafte Lösung ergibt sich aber, wenn der Speicher mit Heißwasser oder Dampf aus dem Kraftwerk selbst beladen wird.

Erfindungsgemäß wird der Wärmespeicher geladen, während ein Leistungsbedarf an die Dampfturbinenanlage aus einem Stromnetz unterhalb eines vorgegebenen Grenzwertes liegt. Das Laden erfolgt also zu einem Zeitpunkt niedrigen Leistungsbedarfs im Netz. Durch den Ladevorgang sinkt nämlich kurzfristig die Leistung der Dampfturbine und somit des Kraftwerkes leicht. Ist der Speicher geladen, wird das Kraftwerk im netzgeführten Leistungsbetrieb weiter gefahren.

Erfindungsgemäß wird der Wärmespeicher mit Sattwasser aus einer Dampftrommel des Dampferzeugers geladen. Alternativ oder zusätzlich dazu wird der Wärmespeicher vorteilhafterweise mit Sattdampf aus einer Dampftrommel des Dampferzeugers geladen. Hierzu befindet sich im Wärmespeicher eine Vorlage an kaltem Wasser und die Wärme wird in Form von Dampf eingespeichert. Dafür wird dem Dampferzeuger auf geeignetem Druckniveau Sattdampf aus der Dampftrommel entnommen und den Wärmespeichern direkt zugeführt. Im Speicher kommt es zu einer Kondensation und damit verbundenen Druck-und Temperaturerhöhung. Der Speicher ist geladen, wenn das Temperaturniveau bzw. Druckniveau im Speicher das Niveau des Ladedampfes erreicht.

In weiterer vorteilhafter Ausgestaltung des Verfahrens wird der Wärmespeicher mit überhitztem Dampf aus dem Dampferzeuger oder der Dampfturbine geladen. Dieser hat ein höheres Energieniveau und ermöglicht so ein noch schnelleres Laden der Wärmespeicher. Hierfür wird überhitzter Dampf z. B. nach der Hochdruck-Dampfturbine und Zwischenüberhitzung entnommen und dem Wärmespeicher zugeführt.

Wird überhitzter Dampf auf hohem Druckniveau verwendet (z. B. Frischdampf) kann der überhitzte Dampf direkt in den Speicher geleitet werden. Wenn das Druckniveau der überhitzten Dampfes jedoch unterhalb des nötigen Wärmespeicherdrucks liegt, ist eine indirekte Wärmeübertragung angezeigt. Hierzu wird vorteilhafterweise der Wärmespeicher über einen Wärmetauscher oder Wärmeüberträger geladen.

Zum Beladen des Wärmespeichers kann Hochdruckdampf verwendet werden. Die Dampfturbinenanlage umfasst also vorteilhafterweise einen Hochdruckteil, einen Mitteldruckteil und einen Niederdruckteil, wobei der Wärmespeicher vorteilhafterweise aus dem Hochdruckteil des Dampferzeugers geladen wird. Der Dampf wird dabei vorteilhafterweise dem Mitteldruckteil der Dampfturbine zugeführt wird. Hierdurch ergibt sich im Wärmespeicher ein besonders hoher Energiegehalt, so dass dieser kleiner ausgelegt werden kann oder aber bei gleicher Auslegung einen längeren oder höheren Leistungsschub für die Dampfturbine liefern kann. Allerdings muss der Wärmespeicher dabei für besonders hohe Dampfdrücke ausgelegt sein.

Ist dies nicht gewünscht, soll der Wärmespeicher also nur für niedrigere Drücke ausgelegt sein, wird der Wärmespeicher vorteilhafterweise aus dem Mitteldruckteil des Dampferzeugers geladen. Der Dampf wird dann vorteilhafterweise dem Niederdruckteil der Dampfturbine zugeführt. Dadurch wird zwar nicht dieselbe Energiedichte im Wärmespeicher erreicht, dieser kann aber technisch einfacher ausgelegt werden, da niedrigere Drücke herrschen.

Eine Dampfturbinenanlage gemäß der Erfindung ist in Anspruch 7 beschrieben.

Der Wärmespeicher ist dabei vorteilhafterweise als Ruthsspeicher ausgelegt. Dieser ist im Wesentlichen ein druckfester Trommelspeicher, der größtenteils (z. B. zu 90 %) mit Siedewasser gefüllt ist. Der restliche Raum über dem Wasser ist mit Wasserdampf gleicher Temperatur gefüllt. Wird Dampf entnommen, setzt eine Nachverdampfung ein. Die erforderliche Wärme stammt aus dem Siedewasser. Der Arbeitsbereich des Dampfspeichers wird dabei durch die Anfangs- und Endparameter (Druck und Temperatur) sowie den Anfangsfüllgrad mit Siedewasser definiert.

Eine Gas- und Dampfturbinenanlage umfasst vorteilhafterweise eine beschriebene Dampfturbinenanlage. Diese umfasst eine Gasturbine, deren Abgase zum Betrieb des Dampferzeugers genutzt werden.

Die mit der Erfindung erzielten Vorteile bestehen insbesondere darin, dass der Dampfturbinenteil eines Kraftwerks für längere Zeit warm gehalten werden kann, so dass auch ohne Brennstoffverbrauch Regelleistung bereitgehalten werden kann.

Hierbei ist nur eine Zumischung geringer Mengen an Zusatzdampf als Sattdampf aus dem Speicher nötig. Dadurch kommt es zu einer leichten Temperaturabsenkung am Eintritt der Dampfturbine. Die Dampfturbine wird aber weiterhin mit überhitztem Dampf betrieben und die Neigung zur Kondensation innerhalb der Turbinen wird kleiner.

Die Umsetzung der beschriebenen Erfindung kann unter Verwendung verfügbarer, kostengünstiger, passiver Komponenten (Trommelspeicher, Heißwasser- und Dampfleitungen) geschehen. Es wird damit auf technisch einfache Weise eine Erweiterung des Betriebsbereiches des Kraftwerks, z. B. Leistungsabsenkung durch Entnahme von Wärme (Heißwasser/Dampf) aus dem Dampferzeuger oder Leistungserhöhung durch zusätzliche Dampfzufuhr zur Dampfturbine (aus dem Speicher), erreicht.

Weiterhin bietet die Integration eines Wärmespeichers die Möglichkeit zur Energiespeicherung zum Warmhalten des Wasser- /Dampfkreislaufes (Dampferzeuger) bzw. der Dampfturbine. Weiterhin ist eine Netzstabilisierung durch die Kopplung der Dampfturbine als rotierende Masse im Netz mit Dampfversorgung aus dem Speicher möglich (z. B. Möglichkeit zum Phasenschieberbetrieb mit dem Dampfturbosatz). Das Konzept kann auch nachgerüstet werden (Retrofit).

Die Erfindung wird anhand einer Zeichnung näher erläutert. Darin zeigen:
- FIG 1: einen Graphen der Netzfrequenz, der Leistung und der Regelleistung in einem Verbundnetz aufgetragen gegen die Zeit,
- FIG 2: schematisch eine Dampfturbinenanlage mit Wärmespeicher mit Sattwasserspeisung,
- FIG 3: schematisch eine Dampfturbinenanlage mit Wärmespeicher mit Sattdampfspeisung,
- FIG 4: schematisch eine Dampfturbinenanlage mit Wärmespeicher mit Frischdampfspeisung über einen Wärmetauscher,
- FIG 5: einen Graphen von Wasserstand und Speicherdruck im Wärmetauscher bei Dampfentnahme in den Mitteldruckteil der Dampfturbine aufgetragen gegen die Zeit,
- FIG 6: einen Graphen von Wasserstand und Speicherdruck im Wärmetauscher bei Dampfentnahme in den Niederdruckteil der Dampfturbine aufgetragen gegen die Zeit,
- FIG 7: einen Graphen der relativen Leistung der Dampfturbine aufgetragen gegen die relative Dampfzugabe zum Mitteldruckteil, und
- FIG 8: einen Graphen der Temperaturabsenkung am Eintritt des Mitteldruckteils der Dampfturbine aufgetragen gegen die relative Dampfzugabe zum Mitteldruckteil.

Gleiche Teile sind in allen Figuren mit denselben Bezugszeichen versehen.

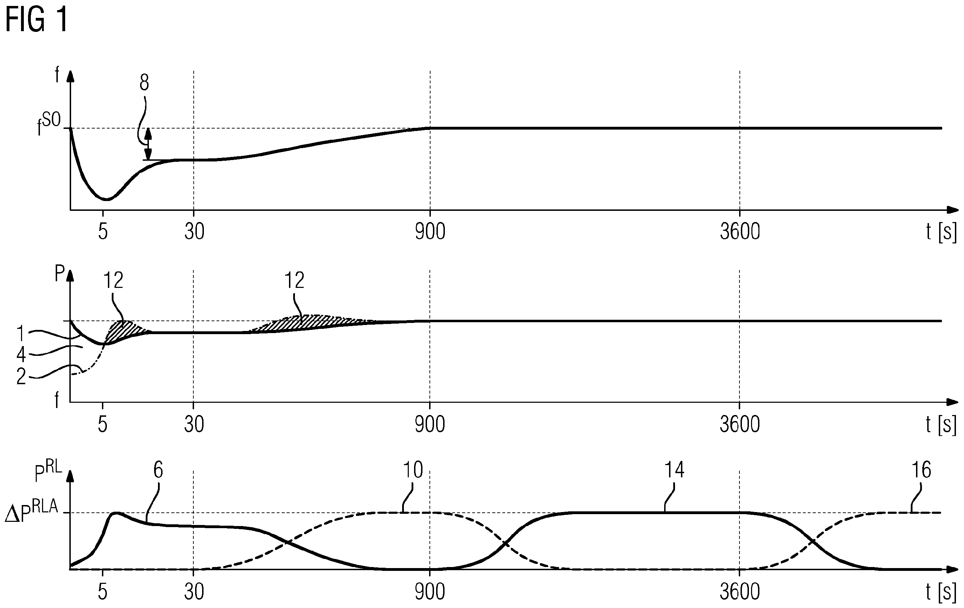

FIG 1 zeigt einen Graphen mit insgesamt drei separaten, übereinander angeordneten Koordinatensystemen. Diese zeigen von oben nach unten die Netzfrequenz f in einem Verbundnetz aufgetragen gegen die Zeit, Verbraucherleistung und Erzeugerleistung P im Verbundnetz aufgetragen gegen die Zeit, und die verschiedenen Arten der Regelleistung PRL in dem Verbundnetz aufgetragen gegen die Zeit. Die Zeitskalen sind identisch und sind in Sekunden angegeben, während die Skalen von Frequenz f, Leistung P und Regelleistung PRL nicht angegeben sind, da die absoluten Skalen für die folgende Beschreibung unerheblich ist.

In einem Verbundnetz wird mittels Kraftwerksmanagement versucht, in Kraftwerken gewonnene Leistung und von Verbrauchern entnommene Leistung samt Transportverlusten im Gleichgewicht zu halten. Wenn der erwartete Leistungsbedarf nicht dem erwarteten Leistungsangebot entspricht, muss die Abweichung kompensiert werden. Dies folgt aus der physikalischen Notwendigkeit, dass elektrische Stromnetze keine Energie speichern können und daher zu jedem Zeitpunkt die eingespeiste Leistung der Summe aus entnommener Leistung und der Verlustleistung infolge Transport entsprechen muss. Abweichungen daraus resultieren in Wechselspannungsnetzen in einer Änderung der Netzfrequenz f, welche im gesamten Wechselspannungsnetz einheitlich (synchron) ist: Bei einem Überangebot von Leistung kommt es zu einer Abweichung der Netzfrequenz f über der Nennfrequenz, bei einem Unterangebot zu einer so genannten Unterfrequenz. Regelleistung PRL wird zur Kompensation dann benötigt, wenn der tatsächliche, momentane Leistungsbedarf nicht dem erwarteten Leistungsangebot entspricht.

Die Aufgabe der Frequenzhaltung wird in verschiedene Regelstufen eingeteilt, die in der FIG 1 durch Zeitangaben auf der Zeitskala nachvollziehbar sind: Die Primärregelung dient dazu, Ungleichgewichte zwischen physikalischem Leistungsangebot und -nachfrage auszugleichen, mit Ziel der Wiederherstellung einer stabilen Netzfrequenz. Es ist unerheblich, in welchem Bereich des Verbundnetzes eine Schwankung auftritt, da die momentane Netzfrequenz sich im gesamten Netzbereich aufgrund von Lastschwankungen verändert. Diese wird für den proportionalen Primärregler der an der Primärregelung teilnehmenden Kraftwerke mit der Sollfrequenz verglichen, wie in FIG 1 gezeigt:
Zum Zeitpunkt 0 s liegt die Verbraucherleistung 1 über der Erzeugerleistung 2. Es kommt also zu einem Leistungsdefizit 4. Durch diese Abweichung wird Primärregelleistung 6 in jedem beteiligten Kraftwerk (meist alle Kraftwerke über 100 MW Nennleistung) gemäß der Reglerkennlinie aktiviert und die Netzfrequenz f so gestützt.

Die an der Primärregelung teilnehmenden Kraftwerke müssen bei einer quasistationären Frequenzabweichung von ±200 mHz, innerhalb von 30 Sekunden die gesamte Primärregelleistung 6 erbringen können, d. h. die Leistungsabgabe linear erhöhen bzw. verringern und diese Leistung bis zu 15 Minuten halten. Die dabei zur Verfügung stehende Primärregelleistung, das so genannte Primärregelband, muss dabei mindestens 2 % der Nennleistung der Anlage entsprechen.

FIG 1 zeigt auch noch die nachgelagerten Regelstufen, zunächst die Sekundärregelleistung 10 mit einem proportionalen und integralen Sekundärregler. Diese hat die Aufgabe, das Gleichgewicht zwischen physikalischem Stromangebot und -nachfrage nach dem Auftreten einer Differenz wieder herzustellen. Die in FIG 1 dargestellten Leistungsüberschüsse 12 durch die Primärregelleistung 6 bei ca. 10 s und etwa 180 s werden hierdurch ausgeglichen. Weiterhin ist in FIG 1 noch die Tertiärregelung oder Minutenreserve 14 gezeigt, sie dient primär der wirtschaftlichen Optimierung. Die Minutenreserve 14 wird vom Übertragungsnetzbetreiber beim Lieferanten telefonisch angefordert. Die vorgehaltene Minutenreserveleistung muss innerhalb von 15 Minuten vollständig erbracht werden können. Darüber hinaus kommt es zur vollständig manuellen Regelleistung 16.

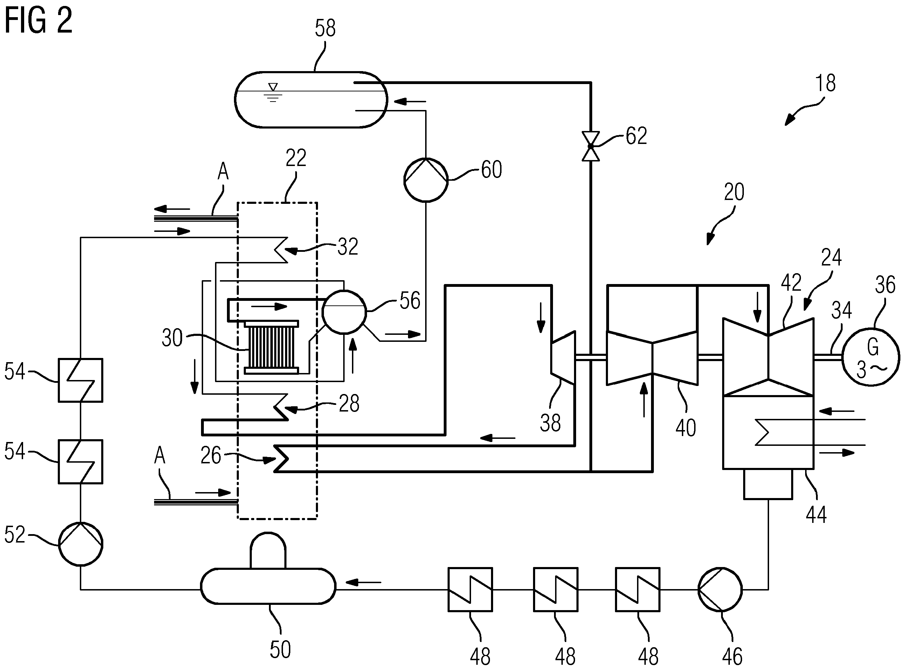

Im Folgenden wird die Primär- und zum Teil auch die Sekundärregelleistung 6, 10 betrachtet. Wie beschrieben muss jeder Netzbetreiber innerhalb des Verbundnetzes innerhalb von 30 Sekunden 2 % seiner momentanen Erzeugung für 15 Minuten als Primärregelreserve zur Verfügung stellen können. In einer in FIG 2 schematisch dargestellten Kraftwerksanlage 18 mit einer Dampfturbinenanlage 20 führt dies im Stand der Technik dazu, dass diese leicht gedrosselt betrieben wird, so dass noch eine Leistungsreserve zur Verfügung steht. Dies wirkt sich negativ auf den Wirkungsgrad der Kraftwerksanlage 18 aus. Die Kraftwerksanlage 18 in FIG 2 kann jedoch auch ohne die Drosselung eine Leistungsreserve bereitstellen, so dass der Wirkungsgrad im Grundlastbetrieb über dem Wirkungsgrad im Stand der Technik liegt.

Die Dampfturbinenanlage 20 in FIG 2 ist Teil einer als Gas-und-Dampfturbinenkraftwerk ausgelegten Kraftwerksanlage 18. Ein Gas-und-Dampf-Kombikraftwerk oder Gas-und-Dampfturbinen-Kraftwerk (kurz GuD-Kraftwerk) ist eine Kraftwerksanlage 18, in dem die Prinzipien eines Gasturbinenkraftwerkes und eines Dampfkraftwerkes kombiniert werden. Eine Gasturbine (nicht gezeigt) dient dabei als Wärmequelle für einen nachgeschalteten Abhitzekessel 22, der wiederum als Dampferzeuger für die Dampfturbine 24 wirkt. Mit dieser kombinierten Fahrweise wird im thermodynamischen Kreisprozess ein höherer Wirkungsgrad erreicht als mit Gasturbinen im offenen Betrieb oder in konventionell befeuerten Dampfkraftwerken. Kombikraftwerke gehören mit elektrischen Wirkungsgraden von bis zu 60 % zu den effizientesten konventionellen Kraftwerken im heutigen Stromnetz. Nichtsdestotrotz ist der im Folgenden beschriebene Aufbau auch in allen anderen Kraftwerksanlagen 18 mit Dampfturbinenanlage 20 realisierbar.

Wie bereits erläutert wird das Abgas der nicht dargestellten Gasturbine in den Abhitzekessel 22 geleitet. Der Abhitzekessel 22 umfasst in Richtung der Strömungsrichtung des Abgases A aufeinanderfolgend einen Zwischenüberhitzer 26, einen Überhitzer 28, einen Verdampfer 30 und einen Economizer 32. Der im Abhitzekessel 22 erzeugte Dampf wird zusammengeführt und zum Antrieb der Dampfturbine 24 genutzt. Die Dampfturbine 24 ist in der Dampfturbinenanlage 20 der FIG 2 auf einer separaten Welle 34 mit einem Generator 36 angeordnet.

Die Dampfturbinenanlage 20 ist als Drei-Druck-Anlage ausgelegt, d. h. die Dampfturbine 24 weist eine Hochdruckturbine 38, eine Mitteldruckturbine 40 sowie eine Niederdruckturbine 42 auf. Der im Folgenden beschriebene Aufbau ist aber auch in komplexeren Strukturen realisierbar. Jede Turbine 38, 40, 42 der Dampfturbine 24 weist in einem Gehäuse in axialer Richtung abwechselnd nicht näher gezeigte Leitschaufeln und Laufschaufeln auf. Die Leitschaufeln sind entlang des Umfanges der Welle 34 einen Kreis bildend angeordnet. Ein derartiger Kreis aus Leitschaufeln wird auch als Leitschaufelrad bezeichnet. Die Laufschaufeln sind ebenfalls kranzförmig als Laufschaufelrad an der jeweiligen Welle 34 drehend angeordnet. Ein Leitschaufelrad wird zusammen mit dem strömungsseitig nachfolgenden Laufschaufelrad als Turbinenstufe bezeichnet.

Der entspannte Dampf der Dampfturbine 24 wird in einen Kondensator 44 geleitet, das verflüssigte Medium wird durch eine Kondensatpumpe 46 über mehrere Niederdruckvorwärmer 48 in einen Speisewasserbehälter 50 mit Entgaser geleitet. Von hier wird das Medium durch eine Speisepumpe 52 über mehrere Vorwärmer 54 dem Abhitzekessel 22 zugeführt. Hier erreicht es zunächst den Economizer 32 und tritt in eine Dampftrommel 56 ein. Die Dampftrommel 56 bildet im Abhitzekessel 22 einen Kreislauf mit dem Verdampfer 30, so dass kontinuierlich flüssiges, vorgewärmtes Medium dem Verdampfer 26 zugeführt wird. Dabei verdampftes Medium tritt am oberen Ende der Dampftrommel 56 aus und in den Überhitzer 28 ein und wird schließlich zur Hochdruckturbine 38 geführt.

In der Hochdruckturbine 38 wird der Dampf entspannt und an deren Austritt zum Zwischenüberhitzer 26 geführt, wo er im Abgasstrom noch einmal überhitzt wird. Anschließend wird der Dampf in die Mitteldruckturbine 40 geleitet, dort weiter entspannt und zur Niederdruckturbine 42 geleitet. Nach der Entspannung in der Niederdruckturbine 42 wird der Dampf in den Kondensator 44 geleitet.

Der Generator 36 der Dampfturbinenanlage 20 kann parallel zum nicht gezeigten Generator der Gasturbine geschaltet sein, oder aber das GuD-Kraftwerk ist als Einwellenanlage ausgelegt, so dass die Gasturbine ebenfalls an die Welle 34 angeschlossen ist. In jedem Fall ist der Generator 36 über einen Transformator an das externe Stromverbundnetz angeschlossen.

Zur Bereithaltung der Regelreserve von zwei Prozent ist der Dampfturbinenanlage 20 ein Wärmespeicher 58 zugeordnet. Der Wärmespeicher 58 besteht aus mehreren Drucktrommelspeichern, die als Ruths-Speicher ausgelegt sind. In den Ruthsspeichern steht flüssiges Medium unter hohem Druck. Im Ausführungsbeispiel der FIG 2 wird der Wärmespeicher 58 mit Sattwasser geladen. Dieses wird aus der Dampftrommel 56 über eine Speisepumpe 60 entnommen und dem Wärmespeicher 58 zugeführt. Soll die im Wärmespeicher 58 gespeicherte Energie abgerufen werden, wird Dampf aus dem Wärmespeicher 58 entnommen und über ein Drosselventil 62 der Mitteldruckturbine 40 zugeführt, also in den Dampfstrom vom Zwischenüberhitzer 26 gemischt.

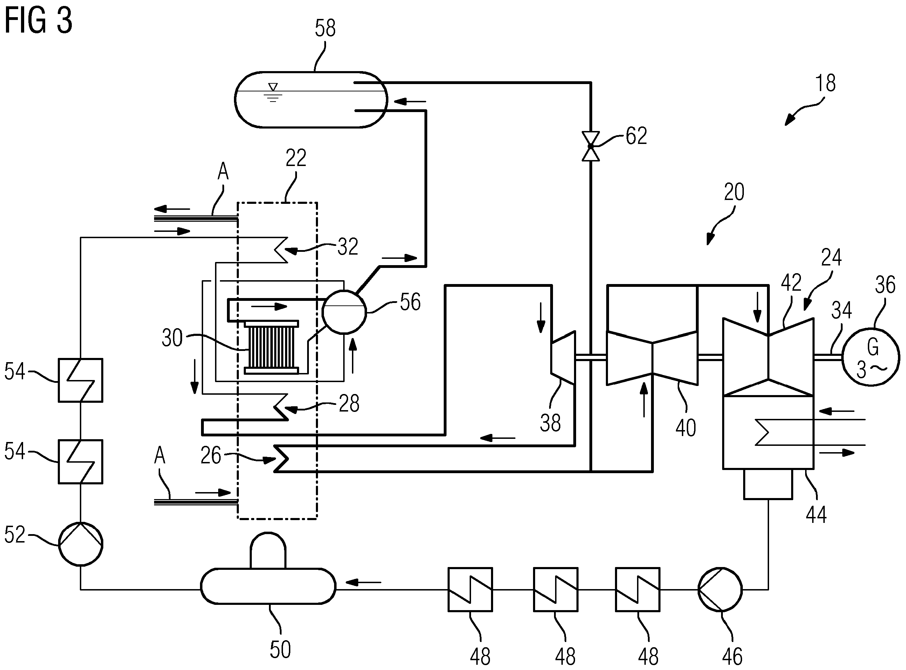

Alternativ kann sich in den Drucktrommelspeichern des Wärmespeichers 58 auch eine Vorlage an kaltem Wasser befinden und Wärme wird in Form von Dampf eingespeichert. Diese Ausführungsform ist in FIG 3 gezeigt, die nur anhand ihrer Unterschiede zu FIG 2 beschrieben wird. Hierbei wird Sattdampf aus der Dampftrommel 56 entnommen und dem Wärmespeicher 58 direkt zugeführt. Im Wärmespeicher 58 kommt es zu einer Kondensation und damit verbundenen Druck-und Temperaturerhöhung.

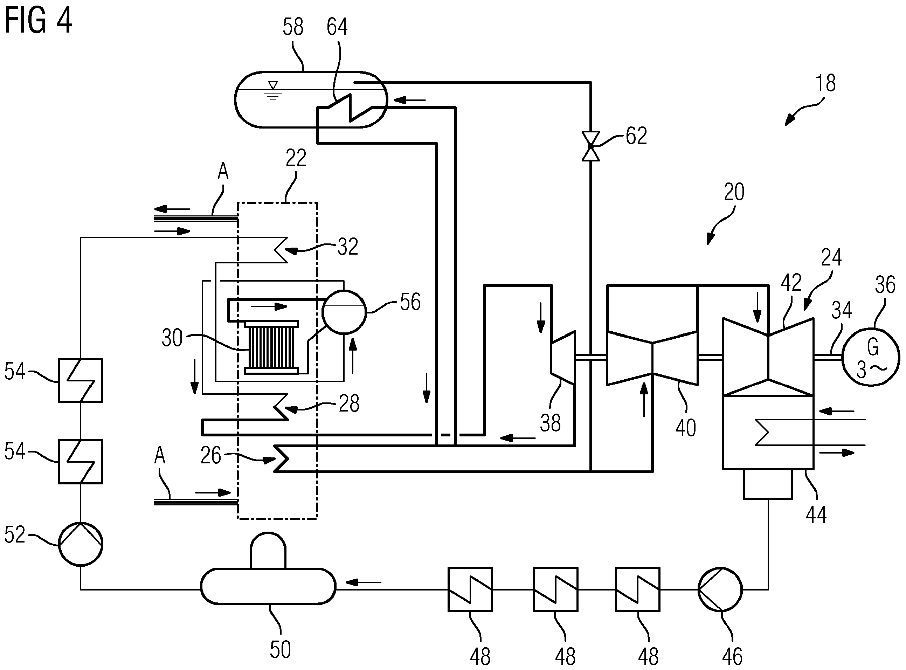

Auch das Laden mit überhitztem Dampf ist möglich. Die entsprechende Ausführungsform ist in FIG 4 gezeigt, die wiederum nur anhand ihrer Unterschiede zu FIG 2 und 3 erläutert wird. Hierfür wird überhitzter Dampf nach der Hochdruckturbine 38 und Zwischenüberhitzer 26 entnommen und dem Wärmespeicher 58 zugeführt. Wenn das Druckniveau der überhitzten Dampfes unterhalb des nötigen Trommelspeicherdrucks liegt, ist der Einbau eines Wärmetauschers 64 im Wärmespeicher 58 notwendig, wie in FIG 4 gezeigt. Der Dampf wird dann aus dem Wärmetauscher zwischen Hochdruckturbine 38 und Zwischenüberhitzer 26 zurückgeführt.

Wird überhitzter Dampf auf hohem Druckniveau verwendet (z. B. Frischdampf direkt aus dem Überhitzer 28, nicht in den Figuren gezeigt) kann auf die indirekte Wärmeübertragung verzichtet werden und der überhitzte Dampf kann direkt in den Wärmespeicher 58 geleitet werden. Ebenso kann beim Ausspeichervorgang auch eine Einspeisung des Dampfes in die Niederdruckturbine 42 erfolgen (ebenso nicht gezeigt).

Der Wärmespeicher 58 ist geladen, wenn das Temperaturniveau bzw. Druckniveau im Wärmespeicher 58 das Niveau des Ladedampfes erreicht. Das Laden erfolgt zu einem Zeitpunkt niedrigen Leistungsbedarfs im Netz. Durch den Ladevorgang sinkt kurzfristig die Leistung der Dampfturbine 24 und somit der Kraftwerksanlage 18 leicht. Ist der Wärmespeicher 58 geladen, wird die Kraftwerksanlage 18 im netzgeführten Leistungsbetrieb weiter gefahren. Es ist nun keine Drosselung der Dampfturbine 24 mehr nötig und der Wirkungsgrad der Kraftwerksanlage 18 liegt über dem heutigen Betriebskonzept.

Der Wärmespeicher 58 erhöht die Flexibilität der Dampfturbinenanlage 20 erheblich. Im Übrigen kann der Wärmespeicher 58 auch auf andere Arten geladen werden, z. B. elektrisch oder mit Wärmepumpen beheizt werden. Damit könnte Überschussstrom aus fluktuierenden Energiequellen (Wind, Sonne) aus dem Netz aufgenommen werden.

Für die Ausspeicherung sind verschiedene Fahrweisen denkbar, die im Folgenden erläutert werden.

Zunächst ist der Betrieb der Dampfturbine 24 prinzipiell ausschließlich mit Dampf aus dem Wärmespeicher 58 möglich. Die Dampfturbine 24 kann mit Dampf aus dem Wärmespeicher 58 angefahren werden. Dadurch ist die Leistungsbereitstellung in sehr kurzer Zeit möglich. Nachteilig bei diesem Konzept ist allerdings, dass die Dampfturbine 24 mit Sattdampf bzw. nur leicht überhitztem Dampf angefahren und betrieben werden muss, was zu technischen Risiken (Wassertropfen aus der Kondensation: Tropfenschlag und Erosion) führen kann.

Die Bereitstellung von Primärregelleistung ist jedoch möglich, wie Konzeptrechnungen zeigen. Als Grundlage der Rechnungen wird ein GuD-Kraftwerk mit Drei-Druck-Zwischenüberhitzungs-Prozess auf Basis einer Gasturbine Siemens SGT5-4000F verwendet. Es wird angenommen, dass Heißwasser auf dem Druckniveau des Frischdampfes (ca. 140 bar, 340 °C) in den Drucktrommelspeichern des Wärmespeichers 58 gespeichert wird. Es wird weiterhin angenommen, dass dreißig Drucktrommeln mit einem Volumen von je ca. 20 m3 als Wärmespeicher 58 installiert werden.

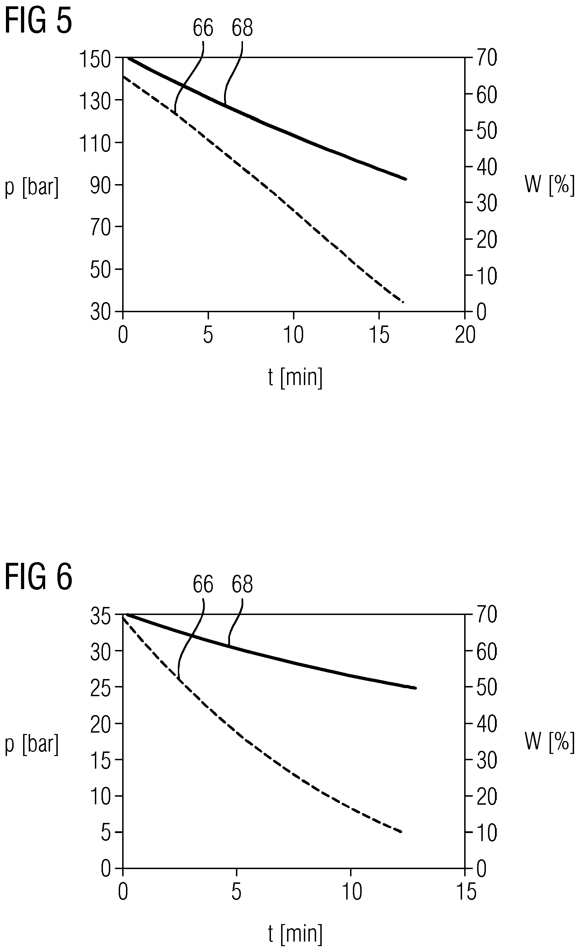

Die Mitteldruckturbine 40 hat einen normalen Dampfmassenstrom von ca. 90 kg/s und wird mit zwischenüberhitztem Dampf betrieben (ca. 30 bar, 560 °C). Führt man nun ausschließlich Dampf mit 90 kg/s aus den vorgenannten Drucktrommeln der Mitteldruckturbine 40 zu (ca. 35 bar, 242 °C), kann eine Leistung von ca. 75 MW erwartet werden. Der Druckabfall des Speicherdrucks 66 im Wärmespeicher 58 und der Füllstand 68 des Speichers sind in FIG 5 dargestellt. Hierbei zeigt der Graph auf der linken Skala den Speicherdruck 66 in bar und auf der rechten Skala den Füllstand in Prozent, aufgetragen gegen die Zeit in Minuten. Wenn Mitteldruckdampf mit einem Druck von ca. 35 bar entnommen wird, ist mit einer Ausspeicherzeit von ca. 15 min. zu rechnen. Dies ist ausreichend, um Primärregelleistung anzubieten.

Ähnlich ist auch die Einspeicherung von Heißwasser auf dem Mitteldruck-Niveau (ca. 35 bar, 242 °C) und die Ausspeicherung in die Niederdruckturbine 42 (ca. 5 bar, 150 °C) möglich. Die Niederdruckturbine 42 hat einen normalen Dampfmassenstrom von ca. 110 kg/s und wird mit durch Entspannung leicht überhitztem Dampf betrieben (ca. 4 bar, 270 °C). Durch die geringere Speicherkapazität des Wärmespeichers 58 am Mitteldruck-Niveau (niedrigere Temperaturdifferenz zwischen vollem und entladenem Speicher) ist die erreichbare Regelleistung dabei kleiner. Es zeigt sich, dass bei einer Entnahme mit 110 kg/s ca. 60 MW für 12 min. bereitgestellt werden können, wenn ebenfalls 30 Drucktrommeln als Wärmespeicher 58 eingesetzt werden. Speicherdruck 66 und Füllstand 68 des Wärmespeichers 58 in diesem Fall sind in FIG 6 gezeigt, in gleicher Darstellung wie FIG 5. Mit einer Vergrößerung der Trommelanzahl sind längere Zeitspannen erreichbar.

Da, wie oben beschrieben, das Anfahren der Dampfturbine 24 mit Sattdampf oder nur leicht überhitztem Dampf technisch problematisch sein kann, ist als Betriebskonzept denkbar, dass der Wärmespeicher 58 dazu genutzt wird, die Dampfturbine 24 auch ohne Wärmebereitstellung im Dampferzeuger 22 (z. B. abgeschalteter Gasturbine im GuD-Kraftwerk) am Netz zu halten. Hierfür wird die Dampfturbine 24 mit einer geringen Menge an Dampf aus dem Wärmespeicher 58 versorgt, um die rotierende Masse am Netz zu halten. Die Dampfmenge ist dabei so gewählt, dass Reibungs- und sonstige Verluste der Dampfturbine 24 durch die Zufuhr von Dampf ausgeglichen werden.

In einer Konzeptrechnung wird wiederum angenommen, dass 30 Hochdruck-Trommeln mit je ca. 20 m3 als Wärmespeicher 58 zur Verfügung stehen. Weiterhin ist angenommen, dass ca. 5 % des Normal-Dampfmassenstroms am Mitteldruck-Niveau als Sattdampf ausreichen, um Reibungsverluste auszugleichen und die Dampfturbine 24 am Netz zu halten. Unter diesen Annahmen lässt sich die Dampfturbine 24 dann für etwa 5 bis 8 Stunden am Netz halten, ohne dass ein Brennstoffverbrauch in der Kraftwerksanlage 18 auftritt.

Zusätzlich ist auch die kurzfristige Erhöhung des Dampfmassenstroms aus dem Wärmespeicher möglich, womit Primärregelleistung bereitgestellt werden kann. Dies führt jedoch, je nach Dampfverbrauch und Speichergröße, zur Verkürzung des möglichen Betriebszeitraumes. Parallel zur Dampfturbine 24 kann auch der Abhitzekessel 22 warmgehalten werden. Dies wird durch die kontinuierliche Zufuhr einer geringen Menge an Dampf zum Abhitzekessel 22 aus dem Wärmespeicher 58 erreicht. Die Dampfmenge wird so gewählt, dass die Wärmeenergie des Dampfes die Wärmeverluste des Abhitzekessels 22 ausgleicht. Der Abhitzekessel 22 verbleibt so auf einer relativ hohen Temperatur und kann schnell wieder in den Volllastbetrieb überführt werden, z. B. wenn die Gasturbine in einem GuD-Kraftwerk angefahren wird.

Schließlich ist auch die Dampfzugabe aus dem Wärmespeicher 58 bei vollem Leistungsbetrieb der Dampfturbine 24 möglich. Hierbei wird das zusätzliche Dampfangebot aus dem Wärmespeicher 58 dazu verwendet, kurzzeitig Mehrleistung bzw. Primär- und Sekundärregelleistung bereitzustellen. Auf die Androsselung der Dampfturbine 24 im normalen Betrieb kann somit dann verzichtet werden, da die Primärregelung durch den Wärmespeicher 58 bereitgestellt werden kann. Damit ist der Wirkungsgrad der Kraftwerksanlage 18 im Grundlastbetrieb höher.

Hierbei werden nur geringe Mengen an Zusatzdampf als Sattdampf aus dem Speicher zugemischt. Dadurch kommt es zu einer leichten Temperaturabsenkung am Eintritt der Dampfturbine 24. Die Dampfturbine wird aber weiterhin mit überhitztem Dampf betrieben und die Neigung zu Kondensation innerhalb der Turbinen 38, 40, 42 wird kleiner.

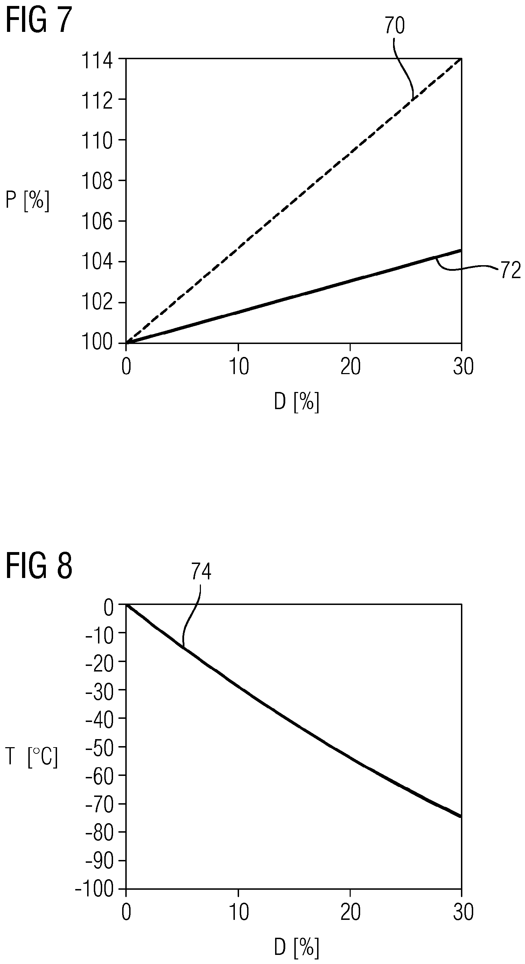

Wiederum werden die Ergebnisse einer konzeptionellen Rechnung für ein GuD-Kraftwerk mit Drei-Druck-Zwischenüberhitzungs-Prozess gezeigt. Der Einfluss der Zugabe von Zusatzdampf zur Mitteldruckturbine 40 ist in FIG 7 dargestellt, die die relative Leistung bezogen auf Volllast in Abhängigkeit von der relativen Dampfzugabe auf Mitteldruck-Niveau sowohl für die Dampfturbinenleistung 70 als auch für die gesamte GuD-Leistung 72 zeigt.

Auch mit diesem Konzept kann die Bereitstellung von Primärregelleistung erfüllt werden. Wie FIG 7 zeigt, wird die GuD-Leistung um ca. 2 % erhöht, wenn die Dampfmenge (Mitteldruck-Niveau) an der Mitteldruckturbine 40 um ca. 12 % ansteigt. Die Auswirkungen auf die Dampfturbineneintrittstemperatur 74 sind gering, wie FIG 8 zeigt. Hier ist die Absenkung der Dampfturbineneintrittstemperatur 74 in °C gegen die relative Dampfzugabe auf Mitteldruck-Niveau gezeigt. So beträgt z. B. die Temperaturreduktion ca. 35 K, d. h. die Dampfturbine 24 wird weiterhin mit stark überhitztem Dampf betrieben.

Die benötigen Dampfmengen sind hierbei gering, was den Speichervolumenbedarf vermindert. Zur Vorhaltung von Primärregelleistung bei einem GuD-Kraftwerk auf Basis einer Gasturbine Siemens SGT5-4000F sind nur vier Hochdruck-Trommeln als Wärmespeicher 58 mit einem Volumen von je ca. 20 m3 erforderlich. Diese vier Trommeln erlauben die Bereitstellung einer Regelenergiereserve von 2 % der Kraftwerksleistung für ca. 15 min. Die Installation einer größeren Trommelanzahl erlaubt bereits die Bereitstellung von Regelenergie im Bereich der Minutenreserve.

Geht man von der Installation von Mitteldruck-Trommeln als Wärmespeicher 58 zur Bereitstellung von Dampf für die Niederdruckturbine 42 bei 5 bar aus, steigt der nötige Dampfmassenstrom, da nur die Leistungssteigerung an der Niederdruckturbine 42 genutzt wird. Für eine ebenfalls zweiprozentige Leistungssteigerung der Kraftwerksanlage 18 ist eine Vergrößerung des Dampfmassenstroms zur Niederdruckturbine 42 um etwa 17 % notwendig. Es sind sechs Mitteldruck-Trommeln mit jeweils ca. 20 m3 erforderlich, um die Leistungserhöhung für ca. 15 min. aufrecht zu erhalten.

## Patentansprüche

1. Verfahren zum Betreiben einer Dampfturbinenanlage (20) mit einer Dampfturbine (24) und einem Dampferzeuger (22), wobei die Dampfturbinenanlage (20) einen der Dampfturbine (24) zugeordneten Wärmespeicher (58) umfasst, aus dem Dampf entnommen und der Dampfturbine (24) zugeführt wird, wobei der Dampf der Dampfturbine (24) zugeführt wird, während der Dampferzeuger (22) außer Betrieb ist
**dadurch gekennzeichnet, dass**
der Wärmespeicher (58) mit Sattwasser aus einer Dampftrommel (56) des Dampferzeugers (22) geladen wird, während ein Leistungsbedarf an die Dampfturbinenanlage (20) aus einem Stromnetz unterhalb eines vorgegebenen Grenzwertes liegt.

2. Verfahren nach Anspruch 1, bei dem der Wärmespeicher (58) mit Sattdampf aus einer Dampftrommel (56) des Dampferzeugers (22) geladen wird.

3. Verfahren nach Anspruch 1 oder 2, bei dem der Wärmespeicher (58) mit überhitztem Dampf aus dem Dampferzeuger (22) oder der Dampfturbine (24) geladen wird.

4. Verfahren nach Anspruch 3, bei dem der Wärmespeicher (58) über einen Wärmetauscher (64) geladen wird.

5. Verfahren nach einem der vorhergehenden Ansprüche, bei dem die Dampfturbinenanlage (20) einen Hochdruckteil, einen Mitteldruckteil und einen Niederdruckteil umfasst und der Wärmespeicher (58) aus dem Hochdruckteil des Dampferzeugers (22) geladen wird und Dampf dem Mitteldruckteil der Dampfturbine (24) zugeführt wird.

6. Verfahren nach einem der vorhergehenden Ansprüche, bei dem die Dampfturbinenanlage (20) einen Hochdruckteil, einen Mitteldruckteil und einen Niederdruckteil umfasst und der Wärmespeicher (58) aus dem Mitteldruckteil des Dampferzeugers (22) geladen wird und Dampf dem Niederdruckteil der Dampfturbine (24) zugeführt wird.

7. Dampfturbinenanlage (20) mit einer Dampfturbine (24), einem Dampferzeuger (22), einem der Dampfturbine (24) zugeordneten Wärmespeicher (58), welcher derart eingerichtet ist, dass Dampf aus diesem entnommen und der Dampfturbine (24) zugeführt werden kann, während der Dampferzeuger (22) außer Betrieb ist und so, dass der Wärmespeicher (58) mit Sattwasser aus einer Dampftrommel (56) des Dampferzeugers (22) geladen werden kann, während ein Leistungsbedarf an die Dampfturbinenanlage (20) aus einem Stromnetz unterhalb eines vorgegebenen Grenzwertes liegt.

8. Dampfturbinenanlage (20) nach Anspruch 7, bei der der Wärmespeicher (58) als Ruthsspeicher ausgelegt ist.

9. Gas- und Dampfturbinenanlage (18) mit einer Dampfturbinenanlage (20) nach Anspruch 7 oder 8.

## Claims

1. Method for operating a steam turbine plant (20) with a steam turbine (24) and a steam generator (22), wherein the steam turbine plant (20) comprises a heat accumulator (58) assigned to the steam turbine (24), from which steam is extracted and fed to the steam turbine (24), wherein the steam is fed to the steam turbine (24) while the steam generator (22) is not in operation,
**characterized in that**
the heat accumulator (58) is charged with saturated water from a steam drum (56) of the steam generator (22) while a power demand for the steam turbine plant (20) from a power grid is below a predefined limit value.

2. Method according to Claim 1, in which the heat accumulator (58) is charged with saturated steam from a steam drum (56) of the steam generator (22).

3. Method according to Claim 1 or 2, in which the heat accumulator (58) is charged with superheated steam from the steam generator (22) or the steam turbine (24).

4. Method according to Claim 3, in which the heat accumulator (58) is charged via a heat exchanger (64).

5. Method according to one of the preceding claims, in which the steam turbine plant (20) comprises a high-pressure part, a medium-pressure part and a low-pressure part, and the heat accumulator (58) is charged from the high-pressure part of the steam generator (22), and steam is fed to the medium-pressure part of the steam turbine (24).

6. Method according to one of the preceding claims, in which the steam turbine plant (20) comprises a high-pressure part, a medium-pressure part and a low-pressure part, and the heat accumulator (58) is charged from the medium-pressure part of the steam generator (22), and steam is fed to the low-pressure part of the steam turbine (24).

7. Steam turbine plant (20) with a steam turbine (24), with a steam generator (22), and with a heat accumulator (58) assigned to the steam turbine (24), which heat accumulator is configured in such a way that steam can be extracted therefrom and fed to the steam turbine (24) while the steam generator (22) is not in operation, and in such a way that the heat accumulator (58) can be charged with saturated water from a steam drum (56) of the steam generator (22) while a power demand for the steam turbine plant (20) from a power grid is below a predefined limit value.

8. Steam turbine plant (20) according to Claim 7, in which the heat accumulator (58) is designed as a Ruths accumulator.

9. Gas and steam turbine plant (18) with a steam turbine plant (20) according to Claim 7 or 8.

## Revendications

1. Procédé pour faire fonctionner une centrale (20) à turbine à vapeur comprenant une turbine (24) à vapeur et un générateur (22) de vapeur, dans lequel la centrale (20) à turbine à vapeur comprend un accumulateur (58) de chaleur, qui est associé à la turbine (24) à vapeur et duquel de la vapeur est prélevée et envoyée à la turbine (24) à vapeur, dans lequel on envoie la vapeur à la turbine (24) à vapeur pendant que le générateur (22) de vapeur est hors de fonctionnement,
**caractérisé en ce que**
on charge l'accumulateur (58) de chaleur d'eau saturée provenant d'un ballon (56) à vapeur du générateur (22) à vapeur, pendant qu'un besoin de puissance de la centrale (20) à turbine à vapeur à partir d'un réseau électrique est en-dessous d'une valeur limite donnée à l'avance.

2. Procédé suivant la revendication 1, dans lequel on charge l'accumulateur (58) de chaleur de vapeur saturée à partir d'un ballon (56) à vapeur du générateur (22) de vapeur.

3. Procédé suivant la revendication 1 ou 2, dans lequel on charge l'accumulateur (58) de chaleur de vapeur surchauffée à partir du générateur (22) de vapeur ou de la turbine (24) à vapeur.

4. Procédé suivant la revendication 3, dans lequel on charge l'accumulateur (58) de chaleur par l'intermédiaire d'un échangeur de chaleur (64).

5. Procédé suivant l'une des revendications précédentes, dans lequel la centrale (20) à turbine à vapeur comprend une partie à haute pression, une partie à moyenne pression et une partie à basse pression et on charge l'accumulateur (58) de chaleur à partir de la partie à haute pression du générateur (22) de vapeur et on envoie de la vapeur à la partie à moyenne pression de la turbine (24) à vapeur.

6. Procédé suivant l'une des revendications précédentes, dans lequel la centrale (20) à turbine à vapeur comprend une partie à haute pression, une partie à moyenne pression et une partie à basse pression et on charge l'accumulateur (58) de chaleur à partir de la partie à moyenne pression du générateur (22) de vapeur et on envoie de la vapeur à la partie à basse pression de la turbine (24) à vapeur.

7. Centrale (20) à turbine à vapeur comprenant une turbine (24) à vapeur, un générateur (22) de vapeur, un accumulateur (58) de chaleur associé à la turbine (24) à vapeur, qui est conçu de manière à pouvoir en prélever de la vapeur et à l'envoyer à la turbine (24) à vapeur pendant que le générateur (22) de vapeur est hors de fonctionnement et ainsi de manière à pouvoir charger l'accumulateur (58) de chaleur d'eau saturée provenant d'un ballon (56) à vapeur du générateur (22) à vapeur pendant qu'un besoin de puissance de la centrale (20) à turbine à vapeur, à partir d'un réseau électrique, est en-dessous d'une valeur limite donnée à l'avance.

8. Centrale (20) à turbine à vapeur suivant la revendication 7, dans laquelle l'accumulateur (58) de chaleur est conçu sous la forme d'un accumulateur Ruths.

9. Centrale (18) à turbine à gaz et à turbine à vapeur comprenant une centrale (20) à turbine à vapeur suivant la revendication 7 ou 8.
